# EUROPEAN PATENT SPECIFICATION

(11) **EP 4 008 659 B1**
(45) Date of publication and mention of the grant of the patent: **02.07.2025**
(21) Application number: 20383051.8
(22) Date of filing: 03.12.2020
(51) Int. Cl.: B66B 1/46

(54) **USER INPUT DEVICES**
BENUTZEREINGABEVORRICHTUNGEN
DISPOSITIFS D'ENTRÉE D'UTILISATEUR

(43) Date of publication of application: 08.06.2022
(73) Proprietor: Otis Elevator Company, Farmington, Connecticut 06032 (US)
(72) Inventor: Muñoz Sotoca, Javier, Leganés, Madrid 28919 (ES); de Diego Restrepo, Borja, Leganés, Madrid 28919 (ES); Garcia González, Marcos, Leganés, Madrid 28919 (ES)
(74) Representative: Dehns

(56) References cited:
- JP-A- 2006 021 906
- JP-A- 2011 162 307
- US-A1- 2015 090 536
- US-A1- 2015 232 300

## Description

### Technical Field

This disclosure relates to user input devices for providing an input to an elevator controller of an elevator system.

### Background Art

Elevator systems typically comprise car operation panels which allow a user to input their destination floor as well as landing panels which allow a user to call an elevator car to their landing. Some landing panels also allow a user to indicate their direction of travel or their destination floor. Such car operation panels or landing panels typically comprise a plurality of buttons which a user has to press in order to make their selection. The buttons require physical contact by the user which introduces the possibility of microbes, e.g. bacteria, archaea, protozoa, algae, fungi, viruses etc., being deposited onto the buttons by a user, or being transferred from the buttons onto a user. Certain microbes may cause a user to become ill. As the buttons may be operated by a number of different users of an elevator system, there is a risk that any microbes present on the buttons may be transferred to other users, thus potentially spreading the microbes between the users of the elevator system. A large number of users may use a single car operation panel or hall panel and thus the potential for spread of microbes through contact with the car operation panel or landing panel may be significant.

US 2015/090536 A1 discloses a touch-free control device for an elevator which contains a control panel and at least one distance sensor. US 2015/232300 A1 discloses an elevator activation system which comprises an optical sensor or time-of-flight camera positioned near buttons of the elevator and projects an optical curtain over buttons of the elevator. JP 2006 021906 A discloses an elevator control panel comprising button devices with infrared devices provided thereon.

It would be advantageous to provide an input device which addresses the problems outlined above.

### Summary of the Disclosure

In accordance with a first aspect of the invention, a user input device is provided according to claim 1.

Accordingly, as will be appreciated, a user may place an object in any one of the plurality of input regions so as to provide an input command by the user input device. The presence of the object in any one of the plurality of input regions is detected by the single touchless sensor and thus the user does not have to come into physical contact with the user input device. Compared to prior art devices which require a user to physically press buttons, the user input device of the present disclosure may reduce the spread of microbes. Additionally, the use of a single touchless sensor which is arranged to detect the presence of an object in any of the plurality of input regions, as opposed to a plurality of touchless sensors each arranged to detect the presence of an object in a respective input region, may minimise the number of components required to be capable of determining a user's input command. This may reduce the cost to manufacture the user input device and may also simplify its manufacture and assembly.

The user may place any suitable object into the plurality of input regions. The object which may be placed in the input regions may depend on the size of the input regions. The user may, for example, insert a finger into one of the input regions in order to issue an input command. Similarly, the user may insert another object, e.g. a key, into an input region. The use of a key may further minimise the chance of depositing microbes on the user input device and minimise the chance of picking up microbes from the user input device. The presence of a finger or key may be detected in a touchless manner using the single touchless sensor. Of course, any other suitable object may be placed into the input regions in order to select an input command.

The single touchless sensor may comprise any touchless sensor that is capable of detecting the presence of an object in each of the plurality of different input regions without requiring physical contact of the object with any part of the user input device. In a set of examples, the single touchless sensor comprises a distance sensor configured to determine the distance at which an object is detected, and wherein each of the plurality of input regions is spaced from the distance sensor by a known distance.

The use of a distance sensor may provide a single touchless sensor which is simple to implement on the user input device. The distance sensor may determine, i.e. measure, the distance at which an object is present and with knowledge of the distance at which each region is located, it may be possible to determine the input region in which the object is present, and hence determine the intended input command.

There is also disclosed an elevator control system comprising the user input device as described above and a controller, wherein the controller is configured to determine the input region in which an object is present based on the known distance of each of the regions from the distance sensor and the distance determined by the distance sensor.

The distance sensor may determine, i.e. measure, the distance at which an object is detected and the controller may then determine the input region in which the object is present. This determination performed by the controller may be based on the known distances of each input region from the distance sensor and the distance measured by the distance sensor. For example, the user input device may comprise three input regions each of which corresponds to a destination floor input command. For example, the first input region, located at 3 cm from the distance sensor may correspond to a third floor input command, a second input region, located at 5 cm from the distance sensor may correspond to a second floor input command, and a third input region, located at 7 cm from the distance sensor may correspond to a first floor input command. When a user places an object, for example, in the second input region, the distance sensor will determine that the object is at 5 cm from the distance sensor. The controller may then take the distance of 5 cm and compare it to the known distances, and determine that a distance of 5 cm corresponds to a second input region which is a second floor input command. This input command may then be used to control an elevator system in an appropriate manner. For example, the input command may be output to a suitable elevator controller. Of course, any number of input regions and associated input commands may be present.

The known distances of each of the plurality of regions may be stored in the controller, e.g. in a memory thereof, in the form of a look up table, i.e. a table correlating a number of distances with associated input commands.

The controller may be integrally provided with the distance sensor such that the distance sensor is capable of determining the distance of an object and also capable of determining the input region in which an object is present, and hence the associated input command. In such examples, the distance sensor may then output a determined input command to an elevator controller which then controls the elevator system, e.g. the elevator car, based on the input command. In another set of examples, the controller may be separate to the distance sensor. For example, the controller may be an elevator controller capable of controlling the elevator system. In such examples, upon the presence of an object in one of the input regions, the distance sensor may output the distance measured to the controller which may then determine the input region which corresponds to the measured distance. The elevator controller may then control the elevator system in an appropriate manner. In either case, the controller may include the known distances to each input region.

Features relevant to both the user input device or the elevator control system will now be described. Each input region may be larger than a typical object which may be placed therein. As a result, the distance determined for an object may have a range of distances for any given input region. Accordingly, in a set of examples, the known distance for each input region comprises a range of distances. It will therefore be possible to determine the input region in which the object is present, irrespective of its relative position in the input region. As will be appreciated, having the input regions as large as possible may be advantageous in certain instances. For example, where the input regions are at least partially defined by apertures, having the apertures as large as possible, and thus making the input regions as large as possible, may reduce the likelihood of the object coming into contact with the user input device. This may minimise the chance of coming into contact with the user input device and thus reduce the spread of any microbes thereon.

In examples comprising a controller in which distance information regarding each of the input regions is stored, a range of distances may be stored for each input region. For example, a first input region may correspond to distances of 2.5 cm - 3.5 cm from the distance sensor, a second input region may correspond to distances of 4.5 cm - 5.5 cm from the distance sensor, etc. Accordingly, an object detected at 2.8 cm or 3.2 cm, for example, will be determined to be in the first input region and a corresponding input command will be determined.

The distance sensor may comprise any suitable arrangement for determining the distance between an object and the distance sensor. In a set of examples, the distance sensor comprises an emitter configured to emit a beam through the plurality of input regions and a receiver configured to receive the beam reflected by an object placed in one of the plurality of input regions. The distance sensor may therefore be a beam-type distance sensor which measures distance based on the emission and subsequent detection of a beam. The beam may comprise any electromagnetic beam that is suitable for distance measurement. In a set of examples, the beam is a light beam, e.g. a laser beam. In another set of examples, the beam is an infrared beam. Beam-type sensors are typically directional, and thus erroneous measurements from other parts of the user input device may be avoided.

As will be appreciated, the beam emitted by the emitter passes through each of the input regions. When an object is placed in one of the input regions, the object may obstruct the beam and a portion of the beam may be reflected back towards the receiver and detected thereon. The distance sensor may determine the distance to the object based on a known speed of the beam and the difference in time from emission to detection of the beam. A beam-type distance sensor, as discussed above, may provide a convenient means for providing touchless detection. When there is no object obstructing the beam, the beam may pass through all of the input regions and be directed in a manner such that beam is not reflected back towards the receiver. In this case, the receiver will not detect any reflected beam and thus no distance measurement will be possible. When no distance measurement is possible, the controller may assume that no object is present in any of the input regions and thus conclude that no input command is being entered.

In some other examples, even when there is no object within the input regions, a portion of the beam may still be reflected back towards the receiver. This may, for example, be due to reflection of the beam from an internal surface within the user input device. In this case, the controller may be configured to dismiss a measurement corresponding to a reflection from an internal surface within the user input device. For example, the beam may pass through all of the input regions and be reflected from an internal surface which is 20 cm back from the distance sensor. In this exemplary case, the controller may be programmed to be aware that a distance measurement of 20 cm does not indicate an input command.

The input regions may be arranged in any suitable manner such that the single touchless sensor is capable of detecting the presence of an object in any of the plurality of input regions. In a set of examples, the plurality of input regions are arranged in a straight line. For example, the plurality of input regions may be arranged in a vertical straight line. Arranging the plurality of input regions in a straight line may facilitate simple detection with certain types of touchless sensor. For example, arranging the plurality of input regions in a straight line may be particularly suitable in examples wherein the single touchless sensor comprises a distance sensor which emits a beam, as the beam may travel in a straight line through each of the plurality of input regions without requiring redirection. This may simplify the design of the user input device.

Of course, the number and/or type of input regions may mean that the input regions cannot be arranged in a single line and thus the beam may not pass through all of the input regions without redirection. Thus, in another set of examples, the plurality of input regions comprises a first subset of input regions and a second subset of input regions, wherein the user input device further comprises a beam director arranged to direct the beam through at least the second subset of input regions. The use of a beam director to direct the beam through the second set of input regions may advantageously mean that a single touchless sensor can be used to detect the presence of an object in input regions which are not aligned. This may mean that the user input device may be capable of comprising an increased number of input regions. Each of the input regions in the first subset of input regions may be arranged in a straight line, and each of the input regions in the second subset of input regions may be arranged in a straight line. The user input device may comprise further subsets of input regions and further beam directors arranged to direct the beam through the further subsets of input regions. Each of the subsets of input regions may comprise at least one input region.

The user input device may comprise a faceplate to which the single touchless sensor is mounted, either directly or indirectly. The single touchless sensor may be mounted to a front surface of the faceplate, i.e. a surface which faces a user when installed. However, in this position the single touchless sensor may be prone to damage. The single touchless sensor is arranged behind a faceplate, and wherein the plurality of input regions are behind the faceplate and at least partially defined by a plurality of apertures within the faceplate.

Arranging the single touchless sensor behind the faceplate, and providing apertures therein, results in the input regions being located behind the faceplate and accessible via the plurality of apertures. Accordingly, a user may place an object through one of the plurality of apertures in order to place the object in one of the plurality of input regions. This has the advantage that a user has to place the object through the aperture in order to place the object in the input region, and thus the object does not need to touch the faceplate. The faceplate may easily become contaminated in use, for example by microbes deposited by users through accidental touching of the faceplate by users or by objects they are carrying, or from coughing or sneezing in the vicinity of the faceplate. Thus, providing an input region which is behind the faceplate, i.e. not on a front face of the faceplate, may minimise the chance of the user contacting at least the front face of the faceplate, and thus minimise the chance of the user depositing or picking up microbes.

In examples wherein the single touchless sensor comprises a distance sensor which emits a beam, the input region may be defined by the shape and size of the beam, and the space in which the object can reach. This space may be at least partially limited by the apertures in the faceplate. In a further set of examples, each of the apertures comprises at least one wall which extends behind the faceplate and which partially defines each of the plurality of input regions. The at least one wall may at least partially define a volume into which a user can insert an object. The at least one wall may thus limit how far, and at which angles, a user can insert an object through the apertures. The at least one wall may advantageously prevent a user from being able to insert an object and interfere with other components of the user input device, which may otherwise cause damage to the user input device. The wall for each of the apertures may be completely independent from the walls of other apertures, however in other examples the walls for each of the apertures may be integrally provided as a single wall.

In a further set of examples, the at least one wall comprises at least one at least partially transparent portion arranged to allow a beam to pass through each of the plurality of regions. The presence of an at least partially transparent portion in the at least one wall may ensure that the distance sensor, where provided, can accurately measure the distance at which an object is detected. Further, allowing the beam to pass through the input regions unobstructed may also increase the operational distance of the distance sensor. The distance sensor may thus be capable of detecting the presence of objects in an increased number of input regions, which may span a larger distance.

The at least partially transparent portion may be achieved in any suitable manner. For example, a portion of the wall may be made from an at least partially transparent material. The at least partially transparent portion may be fully transparent. In another set of examples, the at least partially transparent portion comprises an opening in the at least one wall which allows the beam to pass through each of the plurality of input regions unimpeded. The opening may therefore be considered to be transparent to the beam. The opening may have any suitable form. For example, it may comprise an opening, e.g. an aperture, in the at least one wall. Alternatively, the opening may be defined by a gap between two walls. For example, the walls may comprise two separated walls, e.g. arcuate walls, which define at least one opening, e.g. in the form of a slot, between each of the walls.

As discussed above, the plurality of input regions may comprise a first subset and a second subset of input regions, and the single touchless sensor may be capable of detecting the presence of an object in any of the input regions in either of the first and second subsets of input regions. However, in some examples, the single touchless sensor may not be capable of determining the presence of an object in a second subset of input regions, e.g. if a distance sensor is used and the distance to some of the input regions in the second subset of input regions may be too large for the distance sensor to function as required. Thus, in another set of examples, the user input device comprises a further plurality of input regions each of which correspond to further input commands and a further single touchless sensor arranged to detect the presence of an object in one of the further plurality of input regions.

The single touchless sensor may be capable of detecting the presence of an object in the plurality of input regions and the further single touchless sensor may be capable of detecting the presence of an object in the further plurality of input regions. Whilst the user input device may thus comprise more than one touchless sensor, the number of touchless sensors is nonetheless kept to a minimum as each touchless sensor is capable of detecting the presence of an object in a plurality of input regions and thus the need to have a separate touchless sensor for each input region is avoided.

The user input device may provide a means for user input at any place in an elevator system. In a set of examples, the user input device is a car operating panel for installation in an elevator car or a landing operation panel for installation in an elevator landing. The input commands which a user can select by placing an object into the input regions may depend on the application of the user input device. In a set of examples, the plurality of input regions comprise regions for inputting at least one of: a destination floor command, a door open command, a door close command, an emergency operation command, an alarm command, a personal identification code, a travel up command and a travel down command. In the exemplary case of a personal identification code, the personal identification code may be a personal identification number (PIN) code and thus each of the input regions may correspond to a different number. Of course, the personal identification code may comprise numbers, letters and/or any other symbol. Accordingly, each of the input regions may correspond to any one of a number, letter or symbol. In examples wherein the user input device is a car operation panel, the input regions may comprise regions for inputting a destination floor command, a door open command, a door close command, an emergency operation command, an alarm command and/or a personal identification code. The user input device may, for example, comprise a plurality of regions which correspond to different destination floors. In examples wherein the user input device is a landing operation panel, the plurality of regions may correspond to a travel up command and a travel down command. Similarly, if the landing operation panel is in the form of a destination entry panel, configured to allow a user to input a destination command at the landing operation panel, the landing operation panel may comprise a plurality of input regions which correspond to different destination commands and optionally input regions corresponding to regions for inputting a personal identification code.

Each of the plurality of input regions may have the same shape and size. However, in certain examples, at least one of the plurality of input regions may have a different shape and/or size when compared to at least one other of the plurality of input regions. For example, an input region which is indicative of a disabled access command may be larger, and thus easier to place an object therein, than other input regions.

An input region which is located behind a faceplate, i.e. behind a front face thereof, of the user input device may advantageously reduce the spreading of microbes between users of an input device.

The input region being located behind the faceplate and being accessible via the aperture may minimise the spread of microbes. As will be appreciated, in order to issue an input command a user places an object, e.g. their finger, through the aperture into the input region. The user may therefore not come into contact with any of the user input device, and be less likely to contact the user input device when compared to touchless sensors which are located on a front face of the user input device. Arranging the touchless sensor behind the faceplate may also minimise the risk of damage to the touchless sensor.

The user input device may further comprise a wall extending behind each aperture which defines the corresponding input region, and wherein the touchless sensor is arranged in the wall. The wall may encompass the aperture. For example, if the aperture is circular, the wall may be cylindrical in shape and have corresponding dimensions to the aperture. The wall may also close a base, i.e. an end, of the input region. In the exemplary case in which the aperture is circular, the wall may have a cylindrical shape with one closed end, i.e. the base, and one open end, defined by the aperture. Closing the base of the input region may limit the extent to which the user can insert an object through the aperture, and thus prevent the user from interfering with components of the user input device. The touchless sensor may be arranged in any suitable manner in the wall. For example, the touchless sensor may be arranged in a portion of the wall facing the aperture, e.g. in a base of the wall, or alternatively the touchless sensor may be arranged in a side portion of the wall. The apertures and associated walls may effectively define recesses in the faceplate into which a user can insert an object to issue an input command.

The at least one aperture may comprise a plurality of apertures each of which comprise corresponding input regions, and each aperture may comprise a separate touchless sensor provided behind the faceplate, spaced from the respective aperture and configured to detect the presence of an object in the respective aperture. Accordingly, it may be possible to input a number of different input commands using the user input device.

### Brief Description of the Drawings

Certain examples of the present disclosure will now be described with reference to the accompanying drawings, in which:
Fig. 1 is a schematic illustration of an elevator system that may employ various examples of the present disclosure;
Fig. 2 is a schematic illustration of a user input device in accordance with the first aspect of the present disclosure;
Fig. 3 is a rear view of the user input device shown in Fig. 2 together with a controller thus forming an elevator control system in accordance with the second aspect of the present disclosure;
Fig. 4 is a side view illustrating the presence of an object in an input region;
Fig. 5 is a graph illustrating the range of distances which may be associated with each input region;
Fig. 6 is a front view of another user input device in accordance with another example of the present disclosure;
Fig. 7 is a rear perspective view of the user input device shown in Fig. 6;
Fig. 8 is a front view of another user input device in accordance with another example of the present disclosure;
Fig. 9 is a rear perspective view of the user input device shown in Fig. 8;
Fig. 10 is a front perspective view of a user input device in accordance with the present disclosure;
Fig. 11 is a rear perspective view of the user input device shown in Fig. 10;
Fig. 12 is a front perspective view of another example of a user input device in accordance with the present disclosure;
Fig. 13 is a rear perspective view of the user input device shown in Fig. 12;
Fig. 14 is a side view illustrating the presence of a user's finger in one of the input regions of the user input device shown in Fig. 12; and
Fig. 15 is a side view illustrating the presence of a metal object in one of the input regions of the user input device shown in Fig. 12.

### Detailed Description

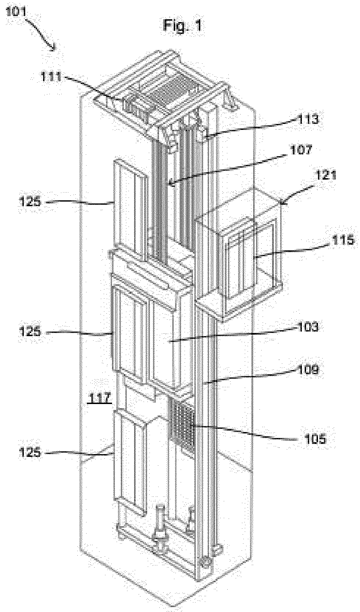

FIG. 1 is a perspective view of an elevator system 101 including an elevator car 103, a counterweight 105, a tension member 107, a guide rail 109, an elevator machine 111, an encoder 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the elevator machine 111, which is part of an overhead structure of the elevator system 101. The elevator machine 111 is configured to control movement between the elevator car 103 and the counterweight 105, and thus control the position of the elevator car 103 within the elevator shaft 117. The encoder 113 may be mounted on a fixed part at the top of the elevator shaft 117, such as on a support or guide rail, and may be configured to provide position signals related to a position of the elevator car 103 within the elevator shaft 117. In other embodiments, the encoder 113 may be directly mounted to a moving component of the elevator machine 111, or may be located in other positions and/or configurations as known in the art. The encoder 113 can be any device or mechanism for monitoring a position of an elevator car and/or counterweight, as known in the art.

The controller 115 is located, as shown, in a controller room 121 of the elevator shaft 117 and is configured to control the operation of the elevator system 101, and particularly the elevator car 103. For example, the controller 115 may provide drive signals to the elevator machine 111 to control the acceleration, deceleration, levelling, stopping, etc. of the elevator car 103. The controller 115 may also be configured to receive position signals from the encoder 113 or any other desired position reference device. When moving up or down within the elevator shaft 117 along guide rail 109, the elevator car 103 may stop at one or more landings 125 as controlled by the controller 115. The controller 115 may also be configured to receive, or determine, input commands based on an output of a user input device as will be described below. Although shown in a controller room 121, those of skill in the art will appreciate that the controller 115 can be located and/or configured in other locations or positions within the elevator system 101. In one embodiment, the controller may be located remotely or in the cloud.

The elevator machine 111 may include a motor or similar driving mechanism. The elevator machine 111 may be configured to include an electrically driven motor. The power supply for the motor may be any power source, including a power grid, which, in combination with other components, is supplied to the motor. The elevator machine 111 may include a traction sheave that imparts force to tension member 107 to move the elevator car 103 within elevator shaft 117.

Although shown and described with a roping system including a tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

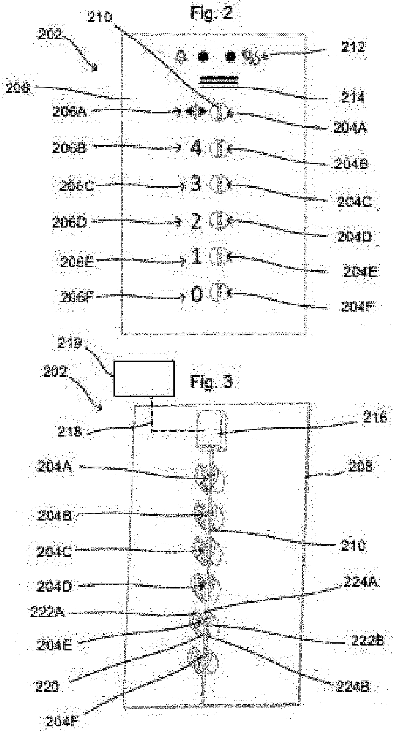

Figure 2 shows a schematic view of a user input device 202 in accordance with an example of the present disclosure. The user input device 202 is in the form of a car operating panel, i.e. it is a user input device which may be arranged in an elevator car to allow a user to input their destination floor and control the elevator car accordingly. The user input device 202 comprises a plurality of input regions 204A-204F. As illustrated, adjacent each of the plurality of regions 204A-204F are markings 206A-206F indicating the input command associated with each of the plurality of input regions 204A-204F. The input regions 204A-204F are partially defined by apertures in the faceplate 208 of the user input device 202. The faceplate 208 may be used to secure the user input device 202 in position, e.g. into a wall of an elevator car, and may protect the components of the user input device 202 behind the faceplate.

An object, e.g. a user's finger or a key, may be placed in the first input region 204A if a user wishes to open the elevator doors or an object may be placed in one of the second to sixth input regions 204B-204F to select a destination floor command. A beam 210, emitted from a single touchless sensor (not visible in this Figure), passes through each of the input regions 204A-204F. A set of indicators 212 are arranged at the top of the user input device 202 and may be used to indicate the state of the elevator system to a user. For example, the indicators 212 may indicate that an alarm has been pressed, or indicate the direction of movement of the elevator car. Additionally, a speaker 214 is arrange to make audible announcements regarding operation of the user input device 202. For example, the speaker 214 may be configured to make a noise when a user places an object in one of the input regions 204A-204F, i.e. indicating the registration of their input command.

Figure 3 shows a perspective view of the rear of user input device 202 in combination with an elevator controller 219, thus forming an elevator control system. As depicted, a single touchless sensor 216 in the form of a distance sensor is arranged on the rear, i.e. behind, of the faceplate 208. The touchless sensor 216, in the form of a distance sensor, emits the beam 210 which passes through each of the input regions 204A-204F. The touchless sensor 216 is in communication with the elevator controller 219 which may control operation of the elevator system. This communication may be achieved through a wire 218 or through wireless communication. The elevator controller 219 may be separate to the touchless sensor 216. In this regard, the touchless sensor 216 may output a signal to the controller 219 which may then analyse and take appropriate action. For example, the touchless sensor 216 may output a distance measurement and the controller 219 may then determine the input command associated with the distance. The controller 219 may be integrated with the user input device 202, e.g. the touchless sensor 216, or be separate from the user input device 202 and be provided by a separate controller, e.g. a main elevator controller, which controls operation of the elevator system.

Each of the input regions 204A-204F is defined by a respective aperture 220 in the faceplate 208, and two walls 222A, 222B. Only one aperture 220 and corresponding walls 222A, 222B are labelled for clarity purposes, but the apertures and arcuate walls for the other input regions 204A-204F may be identical. Whilst in the examples shown the walls 222A, 222B have an arcuate shape, it will be appreciated that they may have any suitable form. The two walls 222A, 222B are separated from one another and define two at least partially transparent portions in the form of two openings 224A, 224B. The two openings 224A, 224B allow the beam 210 emitted from the touchless sensor 216 to pass through all of the input regions 204A, 204F unimpeded. The two walls 222A, 222B act to limit the space in which a user can place an object behind the faceplate 208 and partially define each of the input regions. Whilst two walls 222A, 222B are included in the example shown, these may be replaced by a single wall. In this case, a single wall may comprise at least partially transparent portions, e.g. in the form of openings or at least partially transparent material, which allow the beam to pass through.

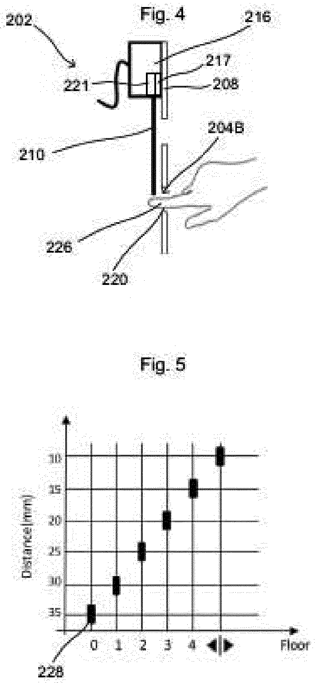

Operation of the user input device 202 will now be described with reference to Figure 4 which shows a side view through a portion of the user input device 202. As depicted, a user may place their finger 226, i.e. an object, through one of the apertures 220 in the faceplate 208, and thus into one of the input regions 204A-204F in order to issue an input command. In the example depicted in Figure 4, the user has placed their finger 226 into the second input region 204B, and thus broken the beam 210 in the second input region 204B. Upon obstruction of the beam 210, the touchless sensor 216, which is in the form of a distance sensor, may then determine the distance at which the beam 210 has been interrupted. The touchless sensor 216 may function in any suitable manner to determine the distance to the interruption of the beam 210. The touchless sensor 216 may comprise an emitter 217 configured to emit the beam 210 and a receiver 221 configured to detect the beam 210 once reflected by an object placed in the path of the beam 210. The touchless sensor 216 may be configured to detect the beam 210 reflected by the object, e.g. the finger 226, which is placed in the path of the beam 210. The distance to the object may be determined based on a known speed of propagation of the beam 210 and the time from emission of the beam 210 to the time at which it is received. Once the distance at which the obstruction is present has been determined, the intended input command of the user is then determined based on a known correspondence between distance and each of the input regions 204A-204F. As discussed above, this may be performed by the controller 219 shown in Figure 3.

The controller 219 may comprise a memory on which the known distances for each input region 204A-204F are stored. The known distances and their associated input commands may be stored in the form of a look-up table. Depending on the size of the apertures 20 and the size of the object which is inserted therein, the object may be placed at a range of positions in the input regions 204A-204F. Accordingly, the measured distance for an object in any one of the input regions 204A-204F may vary depending on the exact position of the object in the input region 204A-204F. Thus, the known distances may comprise a range of distances for each input region 204A-204F. This is depicted in Figure 5 which shows a graph illustrating the correspondence between input commands shown on the horizontal axis, and distances from the touchless sensor 216 on the vertical axis. For each input command, i.e. for each floor destination and for the door open command, a bar 228 illustrates the range of distances which are known to correspond to each particular input command. As will be appreciated by those skilled in the art, the apertures 220 which provide access to each input region 204A-204F may allow a certain degree of freedom in which a user can place an object into the input regions 204A-204F, i.e. the apertures 220 may be larger than the typical objects which a user may insert. This may help to minimise the chance of the user accidentally touching the user input device 202 when inputting a selection. This may mean, however, that the user can place the object into the apertures 220 at a range of positions. Accordingly, by associating a range of distances with each input region 204A-204F this may help to ensure that a correct input region is determined irrespective of the position at which the user inputs the object. This may also facilitate the user placing different sized objects through the apertures 220, e.g. it may allow a user to place a key or a pen through the aperture rather than their finger.

Following determination of the distance by the touchless sensor 216, the input command may be determined. This may be performed by the controller 219 as discussed above. This may be achieved, for example, by the controller 219 comparing the measured distance to a look-up table of known distances and associated input commands which may be stored in a memory of the controller 219. The input command corresponding to the input region in which the user has placed the object 226 may then be directed towards an appropriate part of the elevator system, e.g. the controller 115 depicted in Figure 1.

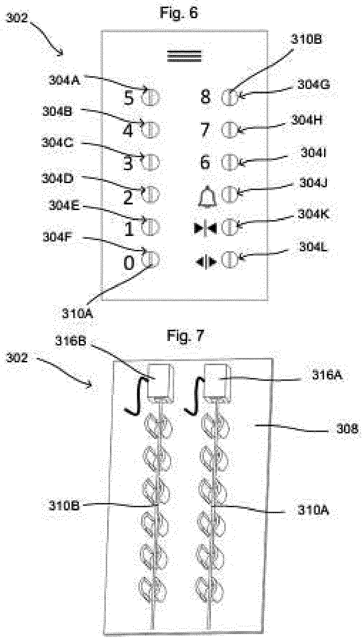

The user input device 202 described above is just one example of a user input device in accordance with the present disclosure. Figure 6 illustrates another user input device 302 in accordance with another example of the present disclosure. The user input device 302 is similar to the user input device 202 shown in previous Figures, except that it comprises more input regions. As depicted, the user input device 302 comprises a first plurality of input regions 304A-304F which are vertically aligned with one another in a straight line, and a further plurality of input regions 304G-304L which are vertically aligned with one another in a straight line. A first beam 310A from a first touchless sensor (not visible in this Figure) passes through the first set of input regions 304A-304F and a second beam 310B passes through the second set of input regions 304G-304L

Figure 7 shows a view of the rear of the user input device 302. As depicted, the user input device 203 comprises two touchless sensors 316A, 316B. The first touchless sensor 316A emits a first beam 310A which passes through the first set of input regions 304A-304F and the second touchless sensor 316B emits a second beam 310B which passes through the second set of input regions 304G-304L. The first touchless sensor 316A may thus be capable of detecting a user inputting an object into one of the first set of input regions 304A-304F and the second touchless sensor 316B may be capable of detecting a user inputting an object into one of the second set of input regions 304G-304L. The first touchless sensor 316A and the second touchless sensor 316B may be distance sensors and operate in an identical manner to the touchless sensor 216 described above. Accordingly, the user input device 302 may be capable of detecting a user placing an object into the first plurality of input regions 304A-304F as well as detecting a user placing an object into the further plurality of input regions 304G-304L. Whilst not illustrated, each of the touchless sensors 316A, 316B may be connected to an independent or a common controller. The controller may function in a similar manner to the controller 219 described above with reference to Figure 3.

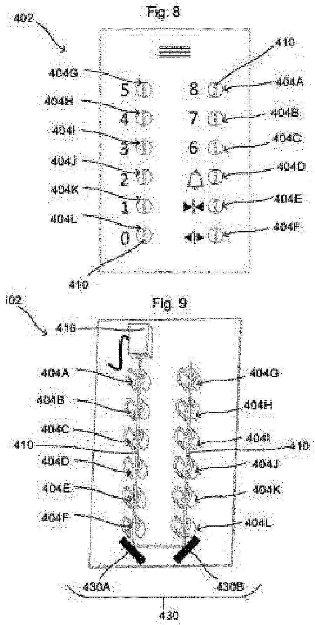

Figure 8 illustrates another user input device 402 in accordance with another example of the present disclosure. The user input device 402, at least from the front as viewed in Figure 8, is similar to the user input device 302 shown in Figure 6. The user input device 402 comprises a first set of input regions 404A-404F and a second set of input regions 404G-404L. However, in this example it is the same beam 410 which passes through the first set of input regions 404A-404F and the second set of input regions 404G-404L, i.e. the beam 410 is generated by a single touchless sensor. This can be seen more clearly in Figure 9 which shows a view of the rear of the user input device 402. As illustrated, a single touchless sensor 416 is included. The beam 410 is emitted from the touchless sensor 416 and passes through the first set of input regions 404A-404F. The beam is then directed by a beam director 430, which comprises a first reflective element 430A and a second reflective element 430B, along the second set of input regions 404G-404L. Accordingly, the same beam 410 passes through all of the plurality of regions 404A-404L. The user input device 402 functions in an identical manner to the user input device 202 described above.

Whilst the touchless sensors described above are in the form of a distance sensor, it will be appreciated that any other form of touchless sensor that is capable of determining the presence of an object in any one of the input regions may be used.

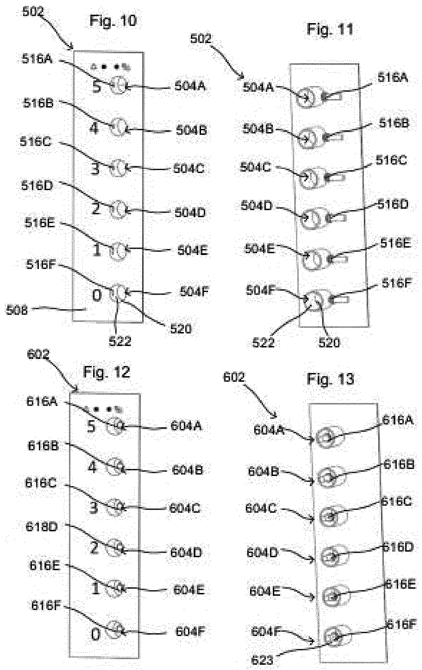

Figure 10 shows a perspective view of a user input device 502 in accordance with the present disclosure. The user input device comprises a plurality of input regions 504A-504F. Each of the plurality of input regions 504A-504F is located behind a respective aperture 520 in the faceplate 508 of the user input device 502. For clarity purposes, only one aperture 520 is labelled, but each of the input regions 504A-504F comprises a similar aperture 520. Each of the apertures 520 comprises a wall 522 which extends behind the faceplate and at least partially defines the input regions 504A-504F. The wall 522 may be integrally provided with the faceplate 508. In the example shown in Figure 10, each of the input regions 504A-504F comprises a touchless sensor 516A-516F.

Figure 11 shows a rear view of the user input device 502 shown in Figure 10 and more clearly shows the walls 522 which extend on the rear of the faceplate 508 around each aperture 520. In the example depicted, the walls 522 have a cylindrical shape. As shown in this Figure, the touchless sensors 516A-516F are arranged in side portions of the walls 522.

The touchless sensors 516A-516F may comprise any sensor that is capable of detecting an object which moves into the vicinity of the touchless sensor, without requiring physical contact with the touchless sensor. The touchless sensors 516A-516F may, for example, comprise a capacitive touch sensor, a Hall Effect sensor, an ultrasound sensor, a beam-type sensor, e.g. an infrared, laser or visible light sensor. Certain types of sensor may only be capable of detecting certain types of objects. For example, Hall Effect sensors may only be capable of detecting metal objects.

Figure 12 shows a front perspective view of another user input device 602 in accordance with the present disclosure and Figure 13 shows a rear perspective view of the user input device 602. The user input device 602 is similar to the user input device 502 shown in Figures 10 and 11, except that the plurality of touchless sensors 616A- 616F are arranged at the base 623 of the input regions 604A-604F.

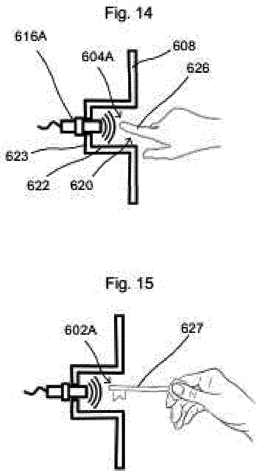

Figure 14 shows a side view of focussing on the first input region 602A of the device shown in Figures 12 and 13. As shown more clearly in this Figure, the touchless sensor 616A is arranged in a base 623 of the wall 622. Of course, the base 623 of the wall 622 may be omitted and the touchless sensor 616A may be held in the same position, but by another support structure provided within the user input device 602. The wall 622 defines an input region 604A which may be considered to correspond to a recess in the faceplate 608.

As depicted in Figure 14, when a user places an object, e.g. their finger 626, into the input region 604A, its presence may be detected by the touchless sensor 616A. The input command corresponding to that input region 604A may then be issued to another controller from the user input device 602, e.g. to an elevator controller, which may then control the elevator system in an appropriate manner. Figure 15 illustrates how another object, e.g. a metal object 627 which may for example be a user's key, may be inserted into the input region 604A in order to issue an input command. In this example, the touchless sensor 616A may specifically be configured to detect the presence of a metal object 627, rather than an object formed from another material.

Any of the user input devices described above may be employed in the elevator system 101 shown in Figure 1. For example, the user input devices may be arranged in the elevator car 103 as car operation panels, or arranged on one or more of the landings 125 as landing panels. Additionally, the input regions in each of the exemplary user input devices described above may be configured to input any suitable input command.

Accordingly, it will be appreciated by those skilled in the art that examples of the present disclosure provide an improved user input device for providing an input to an elevator controller. While specific examples of the disclosure have been described in detail, it will be appreciated by those skilled in the art that the examples described in detail are not limiting on the scope of the claims.

## Claims

1. A user input device (202, 302, 402), for providing an input to an elevator controller (115), comprising:
a plurality of input regions (204A-204F, 304A-304F, 404A-404L) each of which correspond to a different input command; and
a single touchless sensor (216, 316A, 416) arranged to detect the presence of an object in any of the plurality of input regions (204A-204F, 304A-304F, 404A-404L);
**characterized in that** the single touchless sensor (216, 316A, 416) is arranged behind a faceplate (208, 308), and **in that** the plurality of input regions (204A-204F, 304A-304F, 404A-404L) are behind the faceplate (208, 308) and at least partially defined by a plurality of apertures (220) within the faceplate (208, 308).

2. The user input device (202, 302, 402) as claimed in claim 1, wherein the single touchless sensor comprises a distance sensor (216, 316A, 416) configured to determine the distance at which an object is detected, and wherein each of the plurality of input regions (204A-204F, 304A-304F, 404A-404L) is spaced from the distance sensor (216, 316A, 416) by a known distance.

3. An elevator control system comprising the user input device (202, 302, 402) as claimed in claim 2 and a controller (219), wherein the controller (219) is configured to determine the input region (204A-204F, 304A-304F, 404A-404L) in which an object is present based on the known distance of each of the input regions (204A-204F, 304A-304F, 404A-404LF) from the distance sensor (216, 316A, 416) and the distance determined by the distance sensor (216, 316A, 416).

4. A user input device (202, 302, 402) or elevator control system as claimed in claim 2 or 3, wherein the known distance for each input region (204A-204F, 304A-304F, 404A-404L) comprises a range of distances (228).

5. The user input device (202, 302, 402) or elevator control system as claimed in any one of claims 2, 3 or 4, wherein the distance sensor (216, 316A, 416) comprises an emitter (217) configured to emit a beam (210, 310A, 410) through the plurality of input regions (204A-204F, 304A-304F, 404A-404L) and a receiver (221) configured to receive the beam (210, 310A, 410) reflected by an object (226) placed in one of the plurality of input regions (204A-204F, 304A-304F, 404A-404L).

6. The user input device (202, 302, 402) or elevator control system as claimed in any preceding claim, wherein the plurality of input regions (204A-204F, 304A-304F, 404A-404L) are arranged in a straight line.

7. The user input device (402) or elevator control system as claimed in claim 5, wherein the plurality of input regions (404A-404L) comprises a first subset of input regions (404A-404F) and a second subset of input regions (404G-404L), wherein the user input device (402) further comprises a beam director (430) arranged to direct the beam (410) through at least the second subset of input regions (404G-404L).

8. The user input device (202, 302, 402) as claimed in claim 1 or elevator control system as claimed in claim 3, wherein each of the apertures (220) comprises at least one wall (222A; 222B) which extends behind the faceplate (208) and which partially defines each of the plurality of input regions (204A-204F, 304A-304F, 404A-404L).

9. The user input device (202, 302, 402) or elevator control system as claimed in claim 8, wherein the at least one wall (222A; 222B) comprises at least one at least partially transparent portion (224A; 224B) arranged to allow a beam (210, 310A, 410) to pass through each of the plurality of regions (204A-204F, 304A-304F, 404A-404L).

10. The user input device (302) or elevator control system as claimed in any preceding claim, wherein the user input device (302) comprises a further plurality of input regions (304G-304L) each of which correspond to further input commands and a further single touchless sensor (316B) arranged to detect the presence of an object in one of the further plurality of input regions (304G-304L).

11. The user input device (202, 302, 402) or elevator control system as claimed in any preceding claim, wherein the user input device (202, 302, 402) is a car operating panel for installation in an elevator car (103) or a landing operation panel for installation in an elevator landing (125).

12. The user input device (202, 302, 402) or elevator control system of any preceding claim, wherein the plurality of input regions (204A-204F, 304A-304F, 404A-404L) comprise regions for inputting at least one of: a destination floor command, a door open command, a door close command, an emergency operation command, an alarm command, a personal identification code, a travel up command and a travel down command.

## Patentansprüche

1. Benutzereingabevorrichtung (202, 302, 402) zum Bereitstellen einer Eingabe an einer Aufzugssteuerung (115), umfassend:
eine Vielzahl von Eingabebereichen (204A-204F, 304A-304F, 404A-404L), die jeweils einem anderen Eingabebefehl entspricht; und
einen einzelnen berührungslosen Sensor (216, 316A, 416), der dazu angeordnet ist, das Vorhandensein eines Objekts in einem beliebigen der Vielzahl von Eingabebereichen (204A-204F, 304A-304F, 404A-404L) zu erfassen;
**dadurch gekennzeichnet, dass**
der einzelne berührungslose Sensor (216, 316A, 416) hinter einer Frontplatte (208, 308) angeordnet ist und dass sich die Vielzahl von Eingabebereichen (204A-204F, 304A-304F, 404A-404L) hinter der Frontplatte (208, 308) befindet und mindestens teilweise durch eine Vielzahl von Öffnungen (220) innerhalb der Frontplatte (208, 308) definiert ist.

2. Benutzereingabevorrichtung (202, 302, 402) nach Anspruch 1, wobei der einzelne berührungslose Sensor einen Abstandssensor (216, 316A, 416) umfasst, der dazu konfiguriert ist, den Abstand zu bestimmen, in dem ein Objekt erfasst wird, und wobei jeder der Vielzahl von Eingabebereichen (204A-204F, 304A-304F, 404A-404L) um einen bekannten Abstand von dem Abstandssensor (216, 316A, 416) beabstandet ist.

3. Aufzugssteuerungssystem, umfassend die Benutzereingabevorrichtung (202, 302, 402) nach Anspruch 2 und eine Steuerung (219), wobei die Steuerung (219) dazu konfiguriert ist, basierend auf dem bekannten Abstand jedes der Eingabebereiche (204A-204F, 304A-304F, 404A-404LF) zu dem Abstandssensor (216, 316A, 416) und dem von dem Abstandssensor (216, 316A, 416) bestimmten Abstand den Eingabebereich (204A-204F, 304A-304F, 404A-404L) zu bestimmen, in dem ein Objekt vorhanden ist.

4. Benutzereingabevorrichtung (202, 302, 402) oder Aufzugssteuerungssystem nach Anspruch 2 oder 3, wobei der bekannte Abstand jedes Eingabebereichs (204A-204F, 304A-304F, 404A-404L) einen Bereich von Abständen (228) umfasst.

5. Benutzereingabevorrichtung (202, 302, 402) oder Aufzugssteuerungssystem nach einem der Ansprüche 2, 3 oder 4, wobei der Abstandssensor (216, 316A, 416) einen Emitter (217), der dazu konfiguriert ist, einen Strahl (210, 310A, 410) durch die Vielzahl von Eingabebereichen (204A-204F, 304A-304F, 404A-404L) zu emittieren, und einen Empfänger (221) umfasst, der dazu konfiguriert ist, den Strahl (210, 310A, 410) zu empfangen, der von einem Objekt (226) reflektiert wird, das in einem der Vielzahl von Eingabebereichen (204A-204F, 304A-304F, 404A-404L) platziert ist.

6. Benutzereingabevorrichtung (202, 302, 402) oder Aufzugssteuerungssystem nach einem der vorhergehenden Ansprüche, wobei die Vielzahl von Eingabebereichen (204A-204F, 304A-304F, 404A-404L) in einer geraden Linie angeordnet ist.

7. Benutzereingabevorrichtung (402) oder Aufzugssteuersystem nach Anspruch 5, wobei die Vielzahl von Eingabebereichen (404A-404L) eine erste Teilmenge von Eingabebereichen (404A-404F) und eine zweite Teilmenge von Eingabebereichen (404G-404L) umfasst, wobei die Benutzereingabevorrichtung (402) ferner einen Strahlrichter (430) umfasst, der dazu angeordnet ist, den Strahl (410) durch mindestens die zweite Teilmenge von Eingabebereichen (404G-404L) zu richten.

8. Benutzereingabevorrichtung (202, 302, 402) nach Anspruch 1 oder Aufzugssteuerungssystem nach Anspruch 3, wobei jede der Öffnungen (220) mindestens eine Wand (222A; 222B) umfasst, die sich hinter der Frontplatte (208) erstreckt und die jeden der Vielzahl von Eingabebereichen (204A-204F, 304A-304F, 404A-404L) teilweise definiert.

9. Benutzereingabevorrichtung (202, 302, 402) oder Aufzugssteuerungssystem nach Anspruch 8, wobei die mindestens eine Wand (222A; 222B) mindestens einen mindestens teilweise transparenten Abschnitt (224A; 224B) umfasst, der dazu angeordnet ist, einem Strahl (210, 310A, 410) ein Passieren durch jeden der Vielzahl von Bereichen (204A-204F, 304A-304F, 404A-404L) zu ermöglichen.

10. Benutzereingabevorrichtung (302) oder Aufzugssteuerungssystem nach einem der vorhergehenden Ansprüche, wobei die Benutzereingabevorrichtung (302) eine weitere Vielzahl von Eingabebereichen (304G-304L), die jeweils weiteren Eingabebefehlen entspricht, und einen weiteren einzelnen berührungslosen Sensor (316B) umfasst, der dazu angeordnet ist, das Vorhandensein eines Objekts in einem der weiteren Vielzahl von Eingabebereichen (304G-304L) zu erfassen.

11. Benutzereingabevorrichtung (202, 302, 402) oder Aufzugssteuerungssystem nach einem der vorhergehenden Ansprüche, wobei die Benutzereingabevorrichtung (202, 302, 402) ein Kabinenbedienfeld zum Einbau in eine Aufzugskabine (103) oder ein Haltbedienfeld zum Einbau in ein Aufzugshalt (125) ist.

12. Benutzereingabevorrichtung (202, 302, 402) oder Aufzugssteuersystem nach einem der vorhergehenden Ansprüche, wobei die Vielzahl von Eingabebereichen (204A-204F, 304A-304F, 404A-404L) Bereiche zum Eingeben von mindestens einem der Folgenden umfasst: einen Zieletagenbefehl, einen Türöffnungsbefehl, einen Türschließbefehl, einen Notbetriebsbefehl, einen Alarmbefehl, einen persönlichen Identifikationscode, einen Aufwärtsfahrtbefehl und einen Abwärtsfahrtbefehl.

## Revendications

1. Un appareil d'entrée utilisateur (202, 302, 402), destiné à fournir une entrée à un contrôleur d'ascenseur (115), comprenant :
une pluralité de zones d'entrée (204A-204F, 304A-304F, 404A-404L), chacune correspondant à une commande d'entrée différente ; et
un capteur unique sans contact (216, 316A, 416) agencé de manière à détecter la présence d'un objet dans au moins une des zones d'entrée (204A-204F, 304A-304F, 404A-404L) ;
**caractérisée en ce que**
le capteur unique sans contact (216, 316A, 416) est agencé derrière une plaque frontale (208, 308), et **en ce que** la pluralité de zones d'entrée (204A-204F, 304A-304F, 404A-404L) se trouvent derrière la plaque frontale (208, 308) et sont au moins partiellement définies par une pluralité d'ouvertures (220) ménagées dans la plaque frontale (208, 308).

2. L'appareil d'entrée utilisateur (202, 302, 402) conformément à la revendication 1, selon laquelle le capteur unique sans contact comprend un capteur de distance (216, 316A, 416) configuré pour déterminer la distance à laquelle un objet est détecté, et selon laquelle chacune des zones d'entrée (204A-204F, 304A-304F, 404A-404L) est espacée du capteur de distance (216, 316A, 416) d'une distance connue.

3. Un système de commande d'ascenseur comprenant l'appareil d'entrée utilisateur (202, 302, 402) conformément à la revendication 2 et un contrôleur (219), selon laquelle le contrôleur (219) est configuré pour déterminer la zone d'entrée (204A-204F, 304A-304F, 404A-404L) dans laquelle un objet est présent, en fonction de la distance connue de chacune des zones d'entrée (204A-204F, 304A-304F, 404A-404LF) par rapport au capteur de distance (216, 316A, 416) et de la distance déterminée par le capteur de distance (216, 316A, 416).

4. Un appareil d'entrée utilisateur (202, 302, 402) ou un système de commande d'ascenseur conformément à la revendication 2 ou 3, selon laquelle la distance connue pour chaque zone d'entrée (204A-204F, 304A-304F, 404A-404L) comprend une plage de distances (228).

5. L'appareil d'entrée utilisateur (202, 302, 402) ou le système de commande d'ascenseur conformément à l'une quelconque des revendications 2, 3 ou 4, selon laquelle le capteur de distance (216, 316A, 416) comprend un émetteur (217) configuré pour émettre un faisceau (210, 310A, 410) à travers la pluralité de zones d'entrée (204A-204F, 304A-304F, 404A-404L) et un récepteur (221) configuré pour recevoir le faisceau (210, 310A, 410) réfléchi par un objet (226) placé dans l'une des zones d'entrée (204A-204F, 304A-304F, 404A-404L).

6. L'appareil d'entrée utilisateur (202, 302, 402) ou le système de commande d'ascenseur conformément à l'une quelconque des revendications précédentes, selon laquelle la pluralité de zones d'entrée (204A-204F, 304A-304F, 404A-404L) sont agencées en ligne droite.

7. L'appareil d'entrée utilisateur (402) ou le système de commande d'ascenseur conformément à la revendication 5, selon laquelle la pluralité de zones d'entrée (404A-404L) comprend un premier sous-ensemble de zones d'entrée (404A-404F) et un second sous-ensemble de zones d'entrée (404G-404L), et selon laquelle l'appareil d'entrée utilisateur (402) comprend également un dispositif de guidage de faisceau (430) agencé de manière à diriger le faisceau (410) à travers au moins le second sous-ensemble de zones d'entrée (404G-404L).

8. L'appareil d'entrée utilisateur (202, 302, 402) conformément à la revendication 1 ou le système de commande d'ascenseur conformément à la revendication 3, selon laquelle chacune des ouvertures (220) comprend au moins une paroi (222A ; 222B) qui se prolonge derrière la plaque frontale (208) et qui définit partiellement chacune des zones d'entrée (204A-204F, 304A-304F, 404A-404L).

9. L'appareil d'entrée utilisateur (202, 302, 402) ou le système de commande d'ascenseur conformément à la revendication 8, selon laquelle la paroi (222A ; 222B) comprend au moins une portion partiellement transparente (224A ; 224B) agencée de manière à permettre à un faisceau (210, 310A, 410) de traverser chacune des zones d'entrée (204A-204F, 304A-304F, 404A-404L).

10. L'appareil d'entrée utilisateur (302) ou le système de commande d'ascenseur conformément à l'une quelconque des revendications précédentes, selon laquelle l'appareil d'entrée utilisateur (302) comprend une autre pluralité de zones d'entrée (304G-304L) chacune correspondant à d'autres commandes d'entrée et un autre capteur unique sans contact (316B) agencé de manière à détecter la présence d'un objet dans l'une des zones de cette autre pluralité de zones d'entrée (304G-304L).

11. L'appareil d'entrée utilisateur (202, 302, 402) ou le système de commande d'ascenseur conformément à l'une quelconque des revendications précédentes, selon laquelle l'appareil d'entrée utilisateur (202, 302, 402) est un panneau de commande cabine destiné à être installé dans une cabine d'ascenseur (103) ou un panneau de commande palier destiné à être installé sur un palier d'ascenseur (125).

12. L'appareil d'entrée utilisateur (202, 302, 402) ou le système de commande d'ascenseur conformément à l'une quelconque des revendications précédentes, selon laquelle la pluralité de zones d'entrée (204A-204F, 304A-304F, 404A-404L) comprend des zones permettant de saisir au moins l'une des commandes suivantes : une commande d'étage de destination, une commande d'ouverture de porte, une commande de fermeture de porte, une commande d'opération d'urgence, une commande d'alarme, un code d'identification personnelle, une commande de montée et une commande de descente.
